# EUROPEAN PATENT SPECIFICATION

(11) **EP 3 909 084 B1**
(45) Date of publication and mention of the grant of the patent: **08.07.2026**
(21) Application number: 20700990.3
(22) Date of filing: 13.01.2020
(51) Int. Cl.: H01M 10/42

(54) **ELECTRIC BATTERY ASSEMBLIES**
ELEKTROBATTERIEANORDNUNGEN
ENSEMBLES BATTERIE ÉLECTRIQUE

(30) Priority: 11.01.2019 GB 201900417
(43) Date of publication of application: 17.11.2021
(73) Proprietor: Dukosi Limited, Edinburgh, EH14 4AP (GB)
(72) Inventor: CUNNINGHAM, Stuart, Edinburgh EH14 4AP (GB); LEWORTHY, Josh, Edinburgh EH14 4AP (GB); MAIR, Stuart, Edinburgh EH14 4AP (GB); SYLVESTER, Joel, Edinburgh EH14 4AP (GB)
(74) Representative: Finnegan Europe LLP
(86) International application number: PCT/EP2020/050734
(87) International publication number: WO 2020/144384

(56) References cited:
- US-A1- 2013 029 192
- US-A1- 2016 181 705
- US-A1- 2018 120 386
- US-A1- 2018 315 968

## Description

### Field of the Invention

The present invention relates to an electric battery assembly comprising a battery cell and an electronic unit, which comprises a measurement device measuring a property of the battery cell.

From US 2016/181705 A1 there is known a prismatic battery cell used within a mobile telephone. The form factor of the discloses prismatic battery cell is such that the positive and negative terminals lie flush with an end surface.

### Summary

In accordance with an aspect of the invention there is provided an electric battery assembly as defined in claim 1.

The measurement device of the electronic unit may be configured to measure a property of the prismatic battery cell, such as current, voltage or temperature, and the wireless transmitter may be configured to wirelessly transmit the measured property. Advantageously, the support structure may be retrofitted to individual battery cells after manufacture, without requiring any modification to the existing manufacturing process of the battery cell. Furthermore, in some embodiments, two or more battery assemblies may be combined to form a battery, interchangeably referred to as a battery pack, in which each battery cell is associated with an electronic unit comprising a measurement device and a wireless transmitter. In this way, individual properties of each battery cell comprised within the battery pack may be measured. Measured battery cell information may be used by a battery management system (BMS) to control operation of individual battery cells. In some embodiments, a support structure may be attached to two or more battery cells. In such embodiments, the electronic unit, and specifically the measurement device, may be configured to measure a property of the two or more battery cells to which the support structure is attached. Alternatively, the support structure may comprise two or more electronic units, each electronic unit comprising a measurement device configured to measure a property of a different one of the battery cells to which the support structure is attached. In yet a further embodiment, it is envisaged that the electronic unit may comprise two or more measurement devices, each measurement device being configured to measure a property of a different battery cell. The electronic unit may comprise a single wireless transmitter configured to wirelessly transmit the measured property as measured by each one of the two or more measurement devices. In order to facilitate a receiving device, such as a BMS, to identify the battery cell associated with a received measured property, a unique identifier may be associated with each data transmission from the wireless transmitter. The unique identifier enabling the specific battery cell associated with the measured property to be uniquely identified. This facilitates individual battery cell management.

In accordance with certain embodiments, the wireless transmitter is a near-field communication (NFC) device configured for short range communication. The signals emitted by the wireless transmitter are compliant with the relevant NFC standards, the details of which are known in the art. The use of an NFC device as the wireless transmitter helps to reduce the risk of signal interference between different proximally located battery assemblies. Reducing signal interference is particularly important where a plurality of battery assemblies are combined together in a battery pack, in which a plurality of wireless transmitters are transmitting measured data in close proximity with one another. In such applications, there is a significant risk of signal interference. The use of short range communication signals mitigates for such interference. In addition, the use of short range communication signals improves security, and reduces the risk of the unauthorised third parties accessing the transmitted data signals.

In some embodiments, the support structure may be removably attached to the battery cell. This may be advantageous for maintenance purposes, both where the battery cell needs to be accessed for maintenance purposes, and/or where the support structure and/or electronic unit need to be accessed for maintenance reasons.

The support structure comprises a cradle shaped towards first and second ends thereof. The cradle defines - a support surface between the first and second ends, and the support surface is configured to secure the electronic unit at least partly within the cradle. The battery assembly may comprise a cover. The cover and the cradle may have cooperating surface profiles, which attach the cover over the cradle to enclose the electronic unit, and thereby restrict movement of the electronic unit relative to the surface of the battery cell. This configuration of cradle and cover provide an advantageous mechanism for housing the electronic unit, whilst enabling access to the electronic unit. This is advantageous for maintenance purposes.

The electric battery assembly comprises a prismatic battery cell. The positive and negative terminals protrude from the same end surface of the prismatic battery cell at spaced apart locations on the end surface. The end surface of the prismatic battery cell may be substantially planar.

The positive and negative terminals may be rectangular or circular in cross-section. An inter-terminal space is defined and bounded between the positive and negative terminals in a direction across the end surface and bounded between the end surface of the prismatic battery cell and distal surfaces of the positive and negative terminals in a direction orthogonal to the to the end surface.

The first and second ends of the cradle may be configured to attach respectively to the positive and negative terminals of the prismatic battery cell. The cradle defines a support surface between the first and second ends and the electronic unit is supported on the support surface. The support surface is received in the inter-terminal space. The electronic unit may be electrically coupled to each of the positive and negative terminals to thereby provide electrical power for the wireless transmitter. In accordance with some embodiments in which the battery cell comprises a prismatic battery cell, when the cover is attached to the cradle, the cradle and the cover enclose the electronic unit and thereby restrict movement of the electronic unit across the end surface of the prismatic battery cell and in a direction orthogonal to the end surface. Movement of the electronic unit across the end surface is restricted in a direction orthogonal to a direction of separation of the positive and negative terminals across the end surface of: a direction orthogonal to the direction of separation of the positive and negative terminals across the end surface; and the direction of separation of the positive and negative terminals across the end surface.

The cradle and the cover may cooperate to hold the electronic unit in the inter-terminal space and to restrict movement of the electronic unit relative to the prismatic battery cell. The electronic unit may therefore be held relative to the prismatic battery cell with which it operates. Furthermore, and as described below, the electronic unit may be held so as to provide for improved operation of the electronic unit itself and for improved operation of the electronic unit with further electronics in wireless communication with the electronic unit. Aside from this, the electronic unit may be attached to the prismatic battery cell without need for modification of the prismatic battery cell *per se.* Furthermore, location of the electronic unit in the inter-terminal space may minimise the extent to which the footprint of the prismatic battery cell is increased. Ease of accommodation of the electric battery assembly in a larger electric battery structure, such as in an electric vehicle, or in a battery pack, is thus provided.

In certain embodiments, when the support structure is attached to the prismatic battery cell, the cradle may not extend above the positive and negative terminals. An exception in this regard may be in respect of portions which protrude beyond the distal ends of the positive and negative terminals and which define surface profiles that engage with cooperating surface profiles of the cover. An extent to which the footprint of the prismatic battery cell is increased by the support structure is thus minimised.

In certain embodiments, when the support structure is attached to the prismatic battery cell, the cradle may not extend beyond a periphery of the end surface of the prismatic battery cell from which the positive and negative terminals protrude. The footprint of the prismatic battery cell may thus not be increased beyond the periphery of the end surface whereby the prismatic battery cell with support structure attached may be received in a space sufficient to accommodate the prismatic battery cell without the support structure.

Each of the first and second ends of the cradle may be shaped to fit around a respective one of the positive and negative terminals of the prismatic battery cell. More specifically, each of the first and second ends of the cradle may define an aperture and more specifically an enclosed aperture through which a respective one of the positive and negative terminals extends. The aperture may be defined by a boundary wall. The boundary wall may extend no further than a distal end of a terminal.

In accordance with some embodiments, each of the first and second ends of the cradle may define a profile which interlocks with a profile defined by a respective one of the positive and negative terminals. Such interlocking presents resistance to removal of the cradle from the terminal. Where the profile defined by the terminal comprises a recess, such as a recess towards a base of the terminal, the profile defined by the end of the cradle may be shaped to be received in the recess in the terminal. The end of the cradle may be shaped to provide for snap fit attachment to the terminal.

The cradle may comprise a cradle base which defines the support surface on which the electronic unit is supported. The shaped first and second ends of the cradle may extend from opposite ends of the cradle base. The cradle base may define a vent aperture therethrough, which is in registration with a vent in the end surface of the prismatic battery cell when the cradle is attached to the prismatic battery cell. A prismatic battery cell typically has a vent to allow for depressurisation of the prismatic battery cell in the event of malfunction of the prismatic battery cell, which causes an increase in pressure internal to the prismatic battery cell. The vent aperture in the cradle base allows the vent in the prismatic battery cell to function, by assisting with ventilation. Otherwise, the cradle base presents a continuous surface to the end surface of the prismatic battery cell.

In certain embodiments, the cradle may further comprise first and second walls, which extend up from respective opposite edges of the cradle base, and such that each of the first and second walls extends between the positive and negative terminals. The height of the first and second walls may be such that their distal ends extend no further than distal ends of the positive and negative terminals. In embodiments where a terminal receiving aperture is defined by a boundary wall, as described above, the boundary wall may be substantially the same height as the first and second walls. The cradle base and the first and second walls may define a cradle space for receiving the electronic unit. The electronic unit may be shaped such that it is a snug fit between the first and second walls. Movement of the electronic unit across the end surface of the prismatic battery cell may thus be restricted in a direction orthogonal to a direction of separation of the positive and negative terminals.

In some embodiments, the cradle may further comprise a transverse wall which extends up from the cradle base and between the first and second walls. The transverse wall may be spaced apart from an end of the cradle base adjacent the first or second end of the cradle. The transverse wall may present a barrier to movement of the electronic unit across the end surface of the prismatic battery cell in a direction of separation of the positive and negative terminals. The first and second walls and the transverse wall may thus restrict movement of the electronic unit across the end surface in two mutually orthogonal directions. Where a terminal receiving aperture is defined by a boundary wall, as described above, the boundary wall may present a further barrier to movement of the electronic unit across the end surface in a direction of separation of the positive and negative terminals.

As described above, the electronic unit may be electrically coupled to each of the positive and negative terminals via at least one conducting element, to thereby provide electrical power for the wireless transmitter and the measurement device. In some embodiments, the at least one conducting element may comprise first and second electrical conductors extending from the electronic unit, the first and second electrical conductors providing for electrical conduction from the positive and negative conductors respectively. In some embodiments, the first and second electrical conductors may extend from opposite ends of the electronic unit.

In some embodiments, the support structure may define formations which hold the first and second electrical conductors, when housing the electronic unit.

The first and second electrical conductors may be electrically coupled to the positive and negative terminals by different means. According to some embodiments, a distal end of at least one of the first and second electrical conductors may comprise a conductor terminal, which lies over a respective one of the positive and negative terminals. In some embodiments, the conductor terminal may be welded to the terminal. In some embodiments, the conductor terminal may simply be in contact with the terminal, without being welded thereto. In use, the conductor terminal may be sandwiched between the terminal and a busbar, whereby electrical power may be drawn from the terminal by the electronic unit.

In accordance with an embodiment, each of the first and second electrical conductors may be electrically coupled to a conductive fastener, which fastens to a terminal. A conductive fastener may be at a distal end of each of the first and second electrical conductors. The conductive fastener may be shaped to fit around the terminal, which may be rectangular or circular in cross-section. Furthermore, the conductive fastener may define teeth which in use abut against the terminal. The conductive fastener may be shaped and sized to provide an interference fit with the terminal to thereby form a good conductive path from the terminal.

According to an embodiment, the conductive fasteners may form part of the cradle, and may attach the cradle to the positive and negative terminals in addition to providing for electrical conduction. As described above, each of the first and second ends of the cradle may define a profile which interlocks with a profile defined by a respective one of the positive and negative terminals. In accordance with some embodiments, each conductive fastener may be comprised in a respective one of the first and second ends of the cradle, and may define a profile which interlocks with a profile defined by a respective one of the positive and negative terminals. The cradle may be formed, such as from a plastics material as described below, with the conductive fasteners being fitted to the cradle after its formation. Alternatively, the conductive fasteners may be incorporated in the cradle during formation of the cradle. In some embodiments, the electronic unit may be electrically coupled to the conductive fasteners of the cradle by welding or soldering of each the first and second electrical conductors to a respective one of the two conductive fasteners.

In accordance with some embodiments, the cover may be of a size such that when it is attached to the cradle the cover extends no further than a periphery of the end surface of the prismatic battery cell from which the positive and negative terminals protrude. The footprint of the prismatic battery cell may thus not be increased beyond the end surface whereby the prismatic battery cell with cover attached may be received in a space sufficient to accommodate the prismatic battery cell without the cover.

In some embodiments, the cover may be of a size such that when it is attached to the cradle the cover extends at a first end up to the positive terminal and at a second opposite end up to the negative terminal. The positive and negative terminals may therefore be uncovered by the cover whereby the positive and negative terminals may be electrically coupled to the like of bus bars. Otherwise, the cover may cover the cradle space with the exception of at least one aperture extending through the cover to allow the vent of the prismatic battery cell to function.

As described above, the cover and the cradle may have cooperating surface profiles which attach the cover over the cradle. Surface profiles in the cover may be defined by apertures towards a periphery of the cover and which are shaped to receive a respective protrusion extending up from the cradle. Each aperture and a respective protrusion may interlock to provide for snap fit attachment of the cover to the cradle.

In some embodiments, the cover may define a first surface which is directed towards the cradle when the cover is attached to the cradle and a second planar surface which is directed away from the cradle when the cover is attached to the cradle. At least one antenna formation may be defined on the second planar surface. The antenna formation may be shaped to hold an antenna which is in wireless communication with the wireless transmitter of the electronic unit. The antenna may be comprised in the battery assembly. The wireless transmitter may comprise an electronic unit antenna. The cradle and cover may thus cooperate to hold the electronic unit and to provide for proper relative disposition of the wireless transmitter and the antenna held by the cover in the antenna formation. The antenna formation may define a groove which receives the antenna. In some embodiments, the groove may extend across the cover in a direction orthogonal to a direction of separation of the positive and negative terminals. Where there are a plurality of electric battery assemblies as described herein, the plurality of electric battery assemblies may be positioned adjacent each other, whereby their antenna receiving grooves may be in registration whereby a single antenna, such as a transmission line operative as an antenna, may be received in the grooves such that the single antenna extends over the plurality of electric battery assemblies. The cover of each of the electric battery assemblies may therefore provide for wireless communication between each wireless transmitter, and the single antenna, and for proper disposition of the single antenna relative to each wireless transmitter in respect of at least one of separation, and hence isolation, and orientation.

The electronic unit may comprise a printed circuit board, and more specifically a rigid printed circuit board. In certain embodiments, the printed circuit board may be flexible. The wireless transmitter may be constituted by electronic components mounted on the printed circuit board. Further electronic components may be mounted on the printed circuit board. Such further electronic components may form at least a part of the measurement device, and may include the like of a microprocessor.

In accordance with certain embodiments, the support structure may be integrally formed from a plastics material such as polypropylene, which may be glass filled to the extent of 10 to 20%. The cover may be integrally formed from a plastics material such as polypropylene.

The battery cell may comprise a container, and more specifically a rigid container. In those embodiments comprising a prismatic battery cell, the container may comprise one or more pouch cells. Where the container comprises a plurality of pouch cells, the positive terminals of the plurality of pouch cells may be electrically coupled and the negative terminals of the plurality of pouch cells may be electrically coupled. In those embodiments comprising a prismatic battery cell, the container may be of generally, and more specifically, substantially rectangular cuboid form. The container may define first and second oppositely directed end surfaces, and a side surface extending between the first and second end surfaces and extending around the container. The positive and negative terminals may protrude from one, and the same one of the first and second end surfaces. Where the container is of cuboid form and more specifically of rectangular cuboid form, the side surface may comprise first to fourth side surfaces with the first and third surfaces being oppositely directed and the second and fourth surfaces being oppositely directed. The first and third surfaces may be of much larger extent than the second and fourth surfaces. In those embodiments comprising a cylindrical battery cell, the container is of a cylindrical shape, comprising a cylindrical surface having two end surfaces, each end surface representing a different one of the positive or negative battery terminals. The two end surfaces are generally arranged in parallel, with the cylindrical surface extending lengthwise therebetween.

The battery cell may comprise at least one electrochemical arrangement. The electrochemical arrangement may comprise a lithium-ion electrochemical arrangement and more specifically a lithium-ion polymer electrochemical arrangement. Where the battery cell comprises a prismatic battery cell, each at least one electrochemical arrangement may be contained within a pouch cell container, and more specifically a sealed pouch cell container, which may be pliable whereby swelling of the pouch cell container may be allowed for.

According to another aspect of the invention, there is provided an electric vehicle comprising at least one electric battery assembly according to the aforementioned aspect of the invention and any one or more of its embodiments, and an electric motor which drives the electric vehicle in dependence on electric power received from the at least one electric battery assembly.

According to a further aspect of the invention, there is provided a stationary or portable electricity generator, such as an uninterruptible power supply, comprising at least one electric battery assembly according to the aforementioned aspect of the invention and any one of more of its embodiments, and a charger input for charging the at least one electric battery assembly.

### Brief Description of Drawings

Further features and advantages of the present invention will become apparent from the following specific description, which is given by way of example only and with reference to the accompanying drawings, in which:
Figure 1 is an exploded perspective view drawing of an electric battery assembly according to an embodiment in which an electronic unit is attached to a prismatic battery cell via a removable support structure;
Figure 2 is a perspective view of the prismatic battery cell of Figure 1 with the removable support structure of the electric battery assembly attached;
Figure 3A is a view of the prismatic battery cell with the removable support structure attached and the electronic unit in place on the support structure;
Figure 3B is a detailed view around one terminal of the prismatic battery cell of the arrangement of Figure 3A;
Figure 4A shows how an electrical connection is made between the terminal of the prismatic battery cell and the electronic unit according to an embodiment;
Figure 4B shows how an electrical connection is made between circular shaped terminals of the prismatic battery cell and the electronic unit according to another embodiment;
Figure 4C shows how an electrical connection is made between the terminal and the electronic unit according to yet a further embodiment;
Figure 5 shows a prismatic battery cell with the cover of the electric battery assembly attached to the support structure;
Figure 6A is a perspective view drawing of an electric battery assembly according to an embodiment in which an electronic unit is attached to a cylindrical batter cell via a removable support structure;
Figure 6B is an exploded perspective view of the battery assembly of Figure 6A;
Figure 6C is a cross-sectional view of the battery assembly of Figure 6A taken in a plane orthogonal to the battery cell's longitudinal axis;
Figure 7A is a perspective view drawing of a battery assembly comprising a plurality of cylindrical battery cells;
Figure 7B is a plan perspective view of the battery assembly of Figure 7A; and
Figure 8 is a perspective view of a battery comprising a plurality of cylindrical battery cells sharing a singled support structure, in accordance with an embodiment.

### Description of Embodiments

The present inventors have designed an electric battery, which may comprise a plurality of electric battery cells, and a plurality of electronic units, with each one of the plurality of electronic units measuring a property of a respective one of the plurality of electric battery cells. In such an electric battery it is desirable to attach each electronic unit to the electric battery cell on which it operates. Furthermore, it is desirable to attach each electronic unit to its respective electric battery cell in a way that provides for proper operation of the electronic unit while reducing impact on the ease of use of the electric battery cell. Also, it is desirable to attach each electronic unit to its respective electric battery cell without modification of the electric battery cell.

It is therefore an object of at least some of the herein disclosed embodiments to provide an electric battery assembly comprising a battery cell, and an electronic unit, which comprises a measurement device measuring a property of the battery cell, in which the electronic unit is attached to the battery cell. It is a further object of at least some of the herein disclosed embodiments, to provide a method of forming and operating such an electric battery assembly.

In accordance with embodiments of the invention, a support structure is provided for attachment to a battery cell. The support structure may be configured to be removable, and retrofittable to the battery cell. The support structure may be configured to house an electronic unit, and comprises at least one conducting element arranged to electrically couple the electronic unit to positive and negative terminals of the electric battery cell, enabling electrical power to be provided to the electronic unit. The electronic unit comprises a measurement device configured to measure a property of the battery cell, and a wireless transmitter configured to wirelessly transmit the measured property. The wireless transmitter may comprise a near-field communication (NFC) device configured for short range wireless communication. Since the operating characteristics of NFC devices are well known in the art, no further details are provided herein, suffice to say that the wireless transmitter is compliant with all relevant NFC operating standards. The use of near-field communication reduces the risk of signal interference between wireless transmitters located in close proximity.

The removable support structure may comprise different ways of attaching itself to the battery cell, which may be dependent on the form factor of the battery cell. In particular, in accordance with certain embodiments, the support structure may be configured with means for attachment to a battery cell having a prismatic form factor, which are often referred to as prismatic battery cells in the art. Similarly, in alternative embodiments the support structure may be configured with means for attachment to a cylindrical battery cell. Within the context of the present disclosure, the terms prismatic and cylindrical only relate to the geometrical form of the battery cell dictated by its housing, and not to its internal chemistry.

In order to facilitate the reader's understanding of the present invention, embodiments will be described in turn, in which the support structure is configured for attachment to a prismatic battery cell, reducing the impact of the attachment of the support structure with respect to the footprint of the battery cell helps to minimise the impact to the battery cell's existing footprint. Within the present context the term battery footprint is used to denote the volume of space occupied by the battery cell. Reducing the impact attachment of the support structure has to the footprint of the battery cell, helps to ensure that the support structure is retrofittable, and may be incorporated into existing applications of the battery cell. In particular, the disclosed support structures do not provide any geometric and/or volumetric obstruction to combining a plurality of battery cells together to form a battery or battery pack. This is achieved by locating the support structure in a volume of space proximate to the battery cell that does not have any material impact on the battery cell's existing useful geometrical footprint. For example, with regard to prismatic battery cells comprising spaced apart positive and negative terminals extending from a shared battery surface, such a volume of space may be defined between the terminals. Further details in accordance with this embodiment are set out below. In most practical applications the space between the terminals of a prismatic battery cell are not used for any purpose. In particular, this space is not used when packing a plurality of prismatic battery cells together to form a battery pack. Thus, by locating the support structure in this volume of space, the ability to combine the prismatic battery cells together is unaffected. With regard to cylindrical battery cells, a similar effect may be achieved by locating the support structure on a portion of the cylindrical surface, such that when a plurality of cylindrical cells are combined to form a battery pack, the support structure is located in the gaps formed between adjacent cylindrical cells. Again, further details of this embodiment are also disclosed below. Yet a further advantage of the herein disclosed embodiments, is that no modification of the existing battery cell manufacturing process is required to accommodate the support structure.

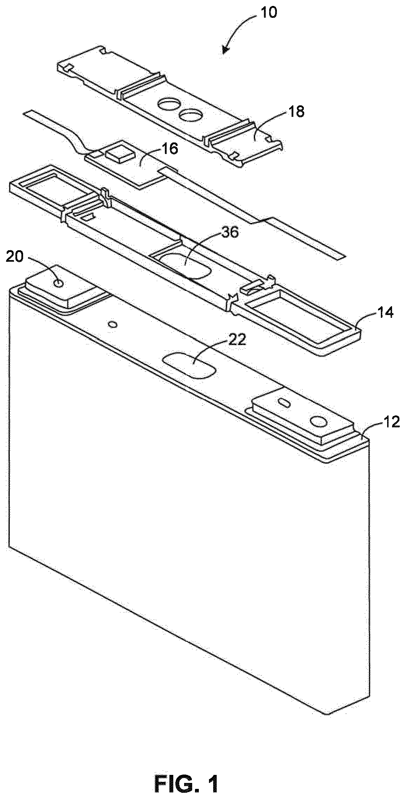

An exploded view drawing of an electric battery assembly 10 according to an embodiment of the invention is shown in Figure 1. The electric battery assembly 10 comprises a prismatic battery cell 12, a support structure 14, an electronic unit 16, and a cover 18. The support structure 14 may be shaped like cradle, and in the ensuing description will be interchangeably referred to simply as the cradle 14. By cradle shaped is intended that the support structure comprises a volume of space, such as a recess, suitable for receiving the electronic unit 16. The prismatic battery cell 12 is of known form and function and therefore comprises a rigid container which may contain a plurality of pouch cells, which may each comprise a lithium-ion polymer electrochemical arrangement. The positive terminals of the plurality of pouch cells may be connected together and brought out to a positive terminal 20 of the prismatic battery cell, and the negative terminals of the plurality of pouch cells may be connected together and brought out to a negative terminal 20 of the prismatic battery cell. The positive and negative terminals 20 protrude up from the same end surface of the prismatic battery cell 12. An inter-terminal space is defined and bounded between the positive and negative terminals 20 in a direction across the end surface and between the end surface of the prismatic battery cell and distal surfaces of the positive and negative terminals in a direction orthogonal to the end surface. A vent 22 may be provided in the end surface of the prismatic battery cell 12 between the positive and negative terminals 20. In outline, the cradle 14 is attached to the prismatic battery cell 12 and the electronic unit 16 is placed on the cradle 14. The electronic unit 16 is electrically coupled to the positive and negative terminals 20. The cover 18 may be attached to the cradle 14 such that the electronic unit 16 is enclosed between the cover and the cradle.

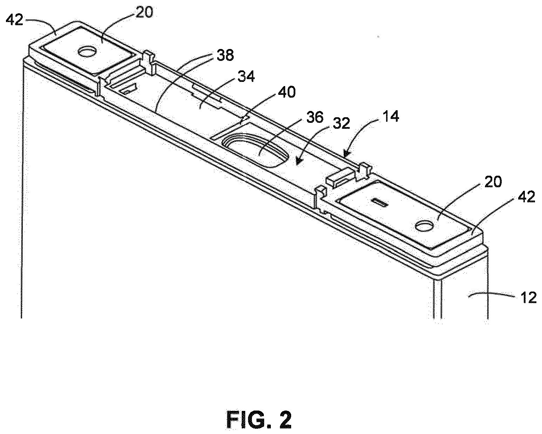

A perspective view of the prismatic battery cell 12 with the cradle 14 of the electric battery assembly attached, is shown in Figure 2. The cradle comprises a cradle base 32, which defines a support surface 34 on which the electronic unit 16 is supported. The cradle base 32 defines a vent aperture 36 therethrough, which may be in registration with the vent 22 in the end surface of the prismatic battery cell 12, to assist with venting the prismatic battery cell. The cradle 14 may further comprise first and second walls 38 which extend up from respective opposite edges of the cradle base 32, and such that each of the first and second walls extends between the positive and negative terminals 20. The height of the first and second walls 38 is such that their distal ends extend no further than distal ends of the positive and negative terminals 20. The cradle 14 may further comprise a transverse wall 40, which extends up from the cradle base 32, and extends between the first and second walls 38. The transverse wall 40 may be spaced apart from each end of the cradle base 32.

Each one of the first and second ends of the cradle 14 may be shaped to fit around a respective one of the positive and negative terminals 20. Considering the first and second ends of the cradle 14 further, each of the first and second ends of the cradle may define an aperture through which a respective one of the positive and negative terminals may extend. The aperture is defined by a boundary wall 42 which is of a height such that it extends no further than a distal end of a terminal 20 and like the first and second walls 38. The cradle base 32, the first and second walls 38, and part of boundary wall 42 at each of the first and second ends, define the recess, equivalently referred to as a cradle space, for receiving the electronic unit 16. Furthermore, as will become clear from the description below, a part of the boundary wall 42 at one of the first and second ends, and the transverse wall 40, present a barrier to movement of the electronic unit 16 across the end surface of the prismatic battery cell, in a direction of separation of the positive and negative terminals 20.

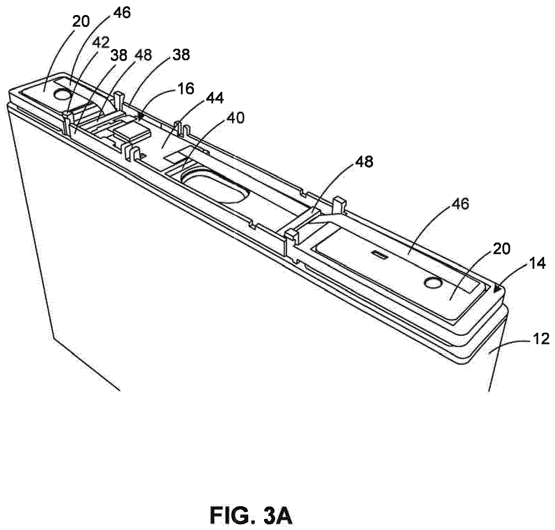

A view of a prismatic battery cell 12 with the cradle 14 attached, and an electronic unit 16 in place on the cradle, is shown in Figure 3A. The electronic unit 16 comprises a measurement device and a wireless transmitter, which are constituted by electronic components mounted on a rigid printed circuit board 44. The measurement device of the electronic unit is configured to measure a property of the prismatic battery cell, such as current, voltage or temperature, and the wireless transmitter wirelessly transmits the measured property. For example, in certain embodiments the measured property may be wirelessly transmitted to a battery management system (BMS). In accordance with certain embodiments, the wireless transmitter is a near-field communication (NFC) device configured for short range communication. This helps to reduce interference between proximally located wireless transmitters, which might occur where a plurality of battery assemblies each comprising separate wireless transmitter are operating in close proximity, for example, within a battery comprising a plurality of the battery assemblies. In such applications, reducing interference is imperative to ensure the faithful transmission of data. Measurement of current, voltage or temperature is in accordance with conventional practice. The form and function of the wireless transmitter may be as described in WO 2018/002667 A1.

The printed circuit board 44 further comprises a microprocessor along with support circuitry of conventional form and function. The microprocessor processes measurements made by the measurement device and forms data packets for wireless transmission of data from the electronic unit 16.

As can be seen from Figure 3A, the printed circuit board 44 is received in the cradle space defined by the cradle 14, and such that the printed circuit board is a snug fit between the first and second walls 38, and between part of the boundary wall 42 of one end of the cradle and the transverse wall 40. Movement of the electronic unit 16 across the end surface of the prismatic battery cell 12 is thus restricted in two mutually orthogonal directions. First and second electrical conductors 46 extend from opposite ends of the printed circuit board 44. The cradle 14 may define first and second formations which hold the first and second electrical conductors respectively. Each of the first and second formations has the form of a simple beam 48 which is spaced apart from the cradle base 32, and is supported at a first end from either the first or second wall 38, and is supported at a second end from the cradle base. The electrical conductor 46 may be fitted under the simple beam 48 to keep the electrical conductor in place and guide it towards its respective terminal 20.

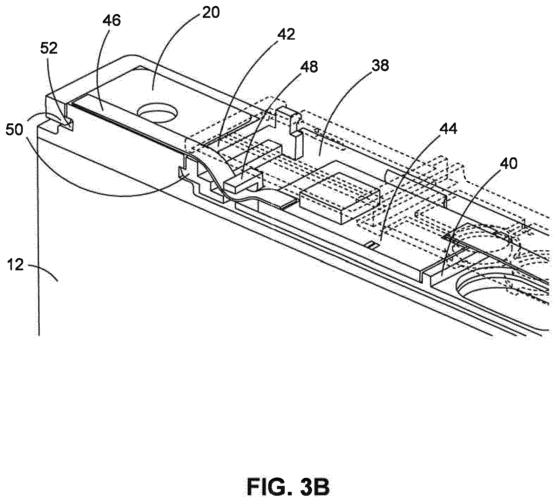

A detailed view of one terminal of the prismatic battery cell of the arrangement of Figure 3A, is shown in Figure 3B. As can be seen from Figure 3B, the boundary wall 42 defines a lip 50 on its inside surface and at its lower edge. Furthermore, the terminal 20 defines a recess 52 around its periphery and towards its base. The cradle 14 is attached to the prismatic battery cell 12 by positioning the cradle 14 over the prismatic battery cell 12 such that the positive and negative terminals 20 are received through respective apertures defined by the boundary walls 42. The cradle 14 is then pressed down against the resistance presented by the lips 50 against their respective terminals 20, until the lips are received in the recesses 52 in the terminals 20. The lips 50 and the recesses 52 thus provide a snap fit which attaches the cradle 14 to the prismatic battery cell 12.

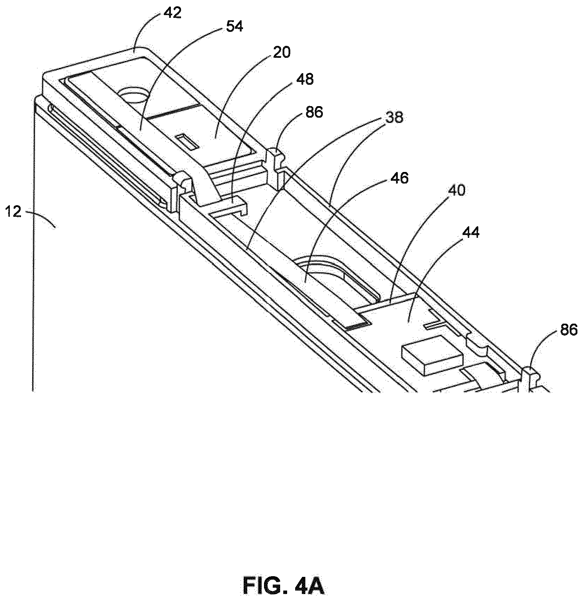

The first and second electrical conductors 46 may be electrically coupled to the positive and negative terminals 20 by one of different means. For example, referring to Figures 3B and 4A (which is Figure 3B rotated through 180 degrees), and according to an embodiment, a distal end of each of the first and second electrical conductors 46 comprises a conductor terminal 54 which lies over and in contact with a respective one of the positive and negative terminals 20. In order to maintain the electrical conductors 46 in contact with the respective terminals 20, the conductor terminals 54 may be welded to the terminals 20. In use, and when the electric battery assembly is being electrically coupled to external apparatus, the conductor terminal 54 may be sandwiched between the terminal 20 and a busbar. When both first and second electrical conductors 46 are electrically coupled to the positive and negative terminals 20 electrical power for the electronic unit 16 is drawn from the prismatic battery cell 12 by way of the positive and negative terminals 20.

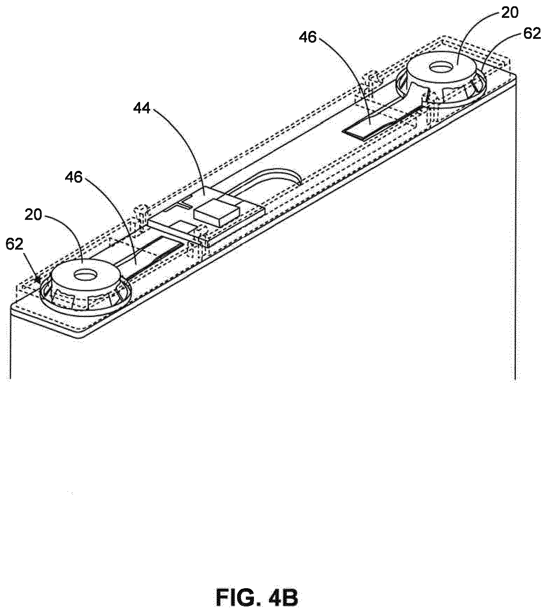

It is to be appreciated that the use of welding represents one non-limiting way of maintaining the electrical conductors in contact with the respective terminals. Alternative means for maintain the electrical conductors in contact with the respective terminals are also envisaged. For example, and with reference to Figure 4B, in accordance with another embodiment, a conductive fastener 62 may be provided at the end of each one of the first and second electrical conductors 46. The conductive fastener 62 is shaped to fit around and to maintain contact with the terminal 20. This may be achieved by dimensioning the conductive fastener 20 to be complementary in shape and size to the cross-sectional shape and size of the terminal 2, in order to enable an interference fit to form with the terminal 20 when the conductive fastener 62 is placed around the terminal 20. The terminal 20 may be rectangular or circular in cross-section, although other cross-sectional shapes are also envisaged. In certain embodiments where the terminal 20 is of circular cross-section, the conductive fastener 62 may comprise a push on fixing washer, for example as provided for by Springmasters Ltd of Arthur Street, Redditch, B98 8LF, United Kingdom. In certain embodiments, the conductive fastener 62 for a terminal of rectangular or circular cross-section may define teeth, which in use abut against the terminal 20 with the conductive fastener being shaped and sized to provide an interference fit with the terminal 20 to thereby form a good conductive path from the terminal.

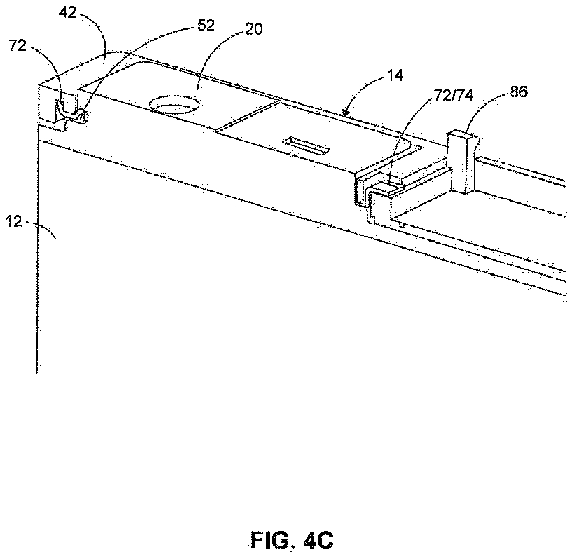

According to a further embodiment, and with reference to Figure 4C, the conductive fasteners 72 may form part of the cradle 14, and attach the cradle to the positive and negative terminals 20, in addition to providing for electrical conduction. As described above with reference to the embodiment of Figure 3B, lips 50 defined by the boundary walls 42 interlock with recesses 52 in the positive and negative terminals 20. According to the present embodiment, each conductive fastener 72 may be comprised in a respective one of the first and second ends of the cradle 14, and defines a protrusion, which interlocks with the recess 52 in a respective one of the positive and negative terminals. The cradle 14 of Figure 4C may be attached to the prismatic battery cell 12 in the same fashion as described above with reference to the aforementioned embodiments, and in particular with reference to the embodiment of Figure 3A, whereby the protrusions defined by the conductive fasteners 72 provide a snap fit with the recesses 52 in the positive and negative terminals 20. The cradle 14 may be formed, such as by moulding from a plastics material as described below, with the conductive fasteners 72 being fitted to the cradle after its formation. Alternatively, the conductive fasteners 72 may be incorporated in the cradle during moulding of the cradle. The electronic unit 16 may be electrically coupled to the conductive fasteners of the cradle by welding or soldering of each the first and second electrical conductors to an exposed part 74 of a respective one of the two conductive fasteners 72.

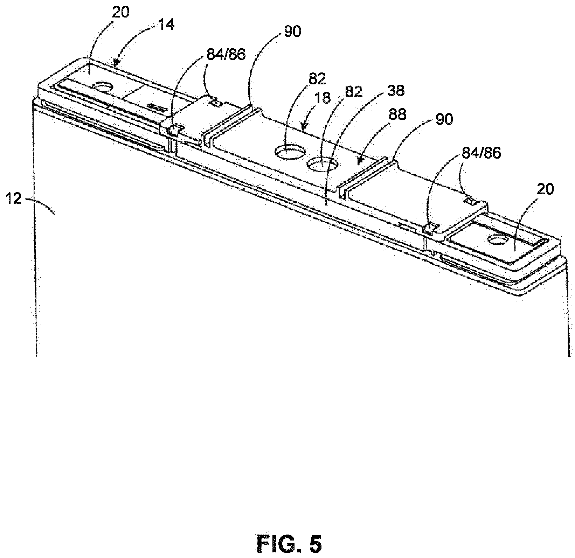

A prismatic battery cell 12 with the cover 18 of the electric battery assembly attached to the cradle, in accordance with an embodiment, is shown in Figure 5. The cover 18 is of a size such that when it is attached to the cradle 14 the cover extends no further than a periphery of the end surface of the prismatic battery cell 12 and above the first and second walls 38. Furthermore, the cover 18 may be of a size such that when it is attached to the cradle 14 the cover extends at a first end up to the positive terminal and at a second opposite end up to the negative terminal. The positive and negative terminals 20 are therefore not covered by the cover 18, whereby the positive and negative terminals can be electrically coupled to the like of bus bars. Otherwise, the cover 18 may be configured to cover the cradle space with the exception of at least one aperture 82 extending through the cover to allow the vent 22 of the prismatic battery cell 12 to function.

The cover 18 and the cradle 14 may comprise cooperating surface profiles, which attach the cover over the cradle. The surface profiles in the cover 18 are defined by apertures 84 towards a periphery of the cover and which are shaped to receive a respective protrusion 86 comprised in and extending up from the cradle. Each aperture 84 and a respective protrusion 86 interlock to provide for snap fit attachment of the cover to the cradle. The cover 18 defines a first surface which is directed towards the cradle when the cover is attached to the cradle 14 and a second planar surface 88 which is directed away from the cradle when the cover is attached to the cradle. Two parallel grooves 90 are defined on the second planar surface 88. The grooves 90 extend across the cover in a direction orthogonal to a direction of separation of the positive and negative terminals 20. Each groove 90 receives and holds a respective cable of a twin cable antenna (not shown). In use, the twin cable antenna is in wireless communication with an electronic unit antenna comprised in the wireless transmitter of the electronic unit 16.

In accordance with certain embodiments, the cradle may be integrally formed from 10-20% glass filled polypropylene. The cover may be integrally formed from polypropylene.

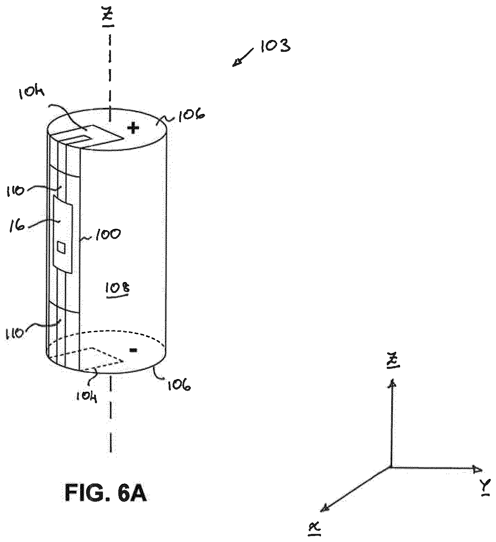

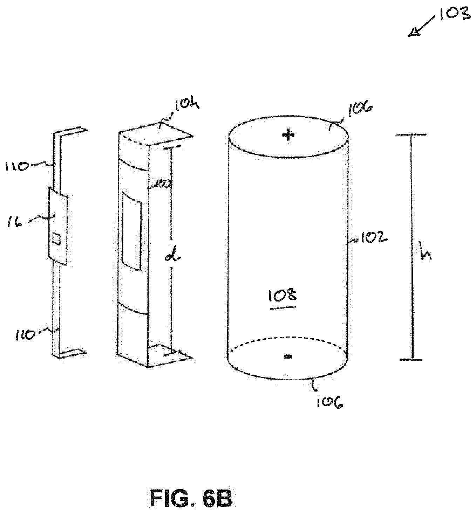

As mentioned previously, in accordance with alternative embodiments, the support structure 100 may be configured for attachment to a cylindrical battery cell 102, as illustrated in the battery assembly 103 of Figure 6A. In contrast with prismatic battery cells, the terminals of a cylindrical battery cell are comprised on opposite end surfaces of the cylindrically shaped battery cell. Figure 6B is an exploded perspective view of the battery assembly 103 of Figure 6A. The support structure 100 of the present embodiment may be cradle-shaped as in the previously described embodiments, and, as with the previously described embodiments, will be interchangeably referred to as a cradle. A noticeable difference between the cradle 100 of the present embodiment and previously disclosed embodiments, is that each one of the first and second ends of the cradle comprises a gripping arm 104 arranged to grip a respective one of the positive and negative cylindrical battery cell terminals 106, enabling the cradle 100 to be attached to the cylindrical battery cell 102. The cradle 100 is arranged to support the electronic unit 16 in substantially the same manner as described previously in relation to previous embodiments.

It is to be appreciated that unless stated otherwise, the support structure envisaged for use with cylindrical battery cells shares the same features as the previously disclosed support structure, described for use with prismatic battery cells. For example, the support structure may comprise a cover and antenna formations as previously disclosed. To avoid repetition, all shared features will not be recited, instead the below description of embodiments comprising cylindrical battery cells will focus on describing the noticeable differences with respect to the prismatic battery cell embodiments.

In accordance with certain embodiments, the cradle 100 may comprise a contact surface arranged to be in contact with at least a portion of the cylindrical surface 108 of the cylindrical battery cell 102, when attached to the battery cell 102. The contact surface may have a surface profile complementary to at least a portion of the profile of the cylindrical surface 108. In particular, the surface profile of the contact surface may comprise a radius of curvature complementary to the radius of curvature of the cylindrical surface 108 of the cylindrical battery cell 102. When attached to the cylindrical battery cell 102, the cradle 100 extends in a direction along at least a portion of the battery cell's height, as illustrated in Figure 6A.

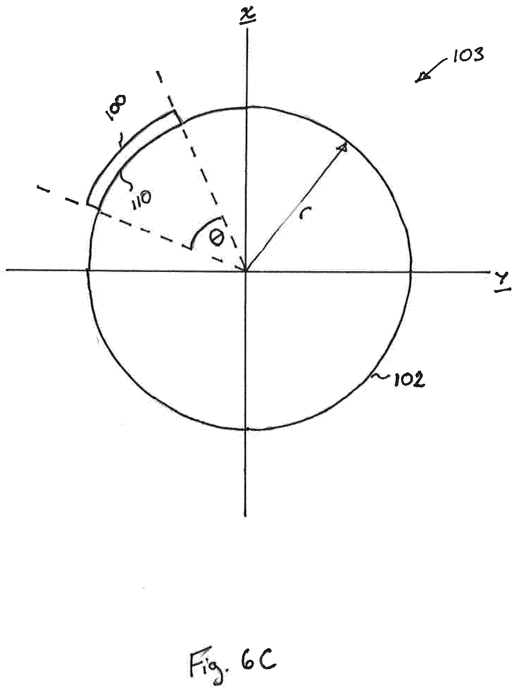

Figure 6C is a cross-sectional plan view of the battery assembly 103 of Figure 6A, taken in a plane orthogonal to a longitudinal axis **z** of the cylindrical battery cell 102. The longitudinal axis **z** is a longitudinal axis of symmetry of the cylindrical battery cell 102. The contact surface 110 is clearly visible in Figure 6C. The width of the contact surface 110 defines an arc length proportional to the radius **r** of the cylindrical battery cell 102, and to an angle **θ**. The angle **θ** represents the angle subtended by the arc length, which represents the width of the contact surface and equivalently the width of the cradle 100. In accordance with embodiments of the present disclosure, the width of the cradle 100 is selected to ensure that it subtends an angle **θ** less than 90°. This helps to minimise any obstruction to other adjacent cylindrical battery cells, when a plurality of cylindrical battery cells are combined into a battery pack.

As illustrated in Figures 6A and 6B, the gripping arms 104 extend in a direction orthogonal to the length of the support structure 100. In accordance with some embodiments, a distance of separation **d** (see Figure 6B) between the gripping arms 104 is selected to ensure that each gripping arm 104 grips its respective battery cell terminal 106 with sufficient force to form a tight interference fit with the terminals 106 of the cylindrical battery cell 102. One way in which this may be achieved is by dimensioning the distance of separation **d** to be slightly less than the cylindrical battery height **h.** The gripping arms 104 may be constructed of a material enabling some flexion of the arms. As the gripping arms 104 are bent in order to fit around the respective battery terminals, a restoring force opposes the direction of bending and helps to ensure that a tight interference fit is formed with the respective terminals 106.

In alternative embodiments it is envisaged that the support structure 100 may be provided with attachment means for attaching the support structure 100 to the cylindrical surface 108 of the cylindrical battery cell 102. For example, one such attachment means may comprise an adhesive strip. The adhesive strip may be placed on the contact surface 110, enabling the support structure 100 to be adhered to the cylindrical surface 108 of the battery cell 102. Alternative attachment means are also envisaged, which enable the support structure 100 to be fixated to the cylindrical surface 108 of the battery cell 102.

In common with previously disclosed embodiments, the support structure 100 may comprise at least one conducting element arranged to electrically couple the electronic unit 16 to the battery cell terminals 106. In the embodiment illustrated in Figures 6A and 6B, the at least one conducting elements comprises first and second electrical conductors 110, which extend from opposite ends of the electronic unit 16, and specifically from opposite ends of the printed circuit board comprised in the electronic unit 16, in a similar manner as described in relation to preceding embodiments. The first and second electrical conductors 110 extend to the gripping arms 104, and the gripping arms 104 are arranged to enable at least a portion of the distal ends of the first and second electrical conductors 110 to form an electrical contact with a respective battery terminal 106. In some embodiments the distal ends of the first and second electrical conductors 110 may be located on an internal surface of the gripping arms 104 in contact with the respective battery terminal 106. In this way, the interference fit formed between the gripping arms 104 and the battery terminals, also assists with establishing the electrical connection between the first and second electrical conductors 104 and the batter terminals 106. For example, the gripping arms may each comprise a cavity (not shown) through which the first and second electrical conductors 110 may be passed to enable the distal ends of the first and second electrical conductors 110 to be located on the internal surface of the gripping arms 104. In certain embodiments the gripping arms 104 may be provided with holes configured to receive the distal ends of the first and second electrical conductors 104, and through which an electrical connection may be established with the respective battery terminal 106.

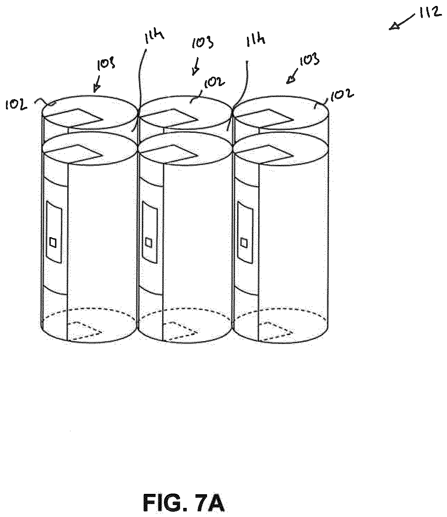

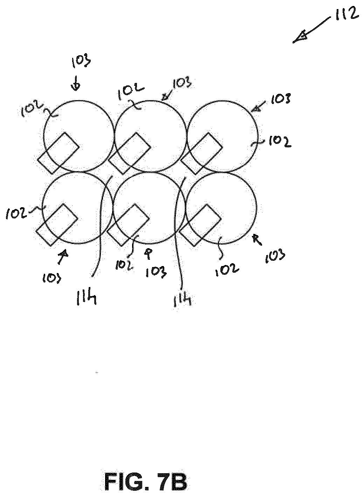

Figure 7A is a perspective view of a battery pack 112, interchangeably referred to simply as a battery, comprising a plurality of battery assemblies 103 as illustrated in Figures 6A-6C. Figure 7B is a plan view of the battery pack 112 of Figure 7A. Each battery assembly 103 comprises a support structure 100 attached to a cylindrical battery cell 102. Figures 7A and 7B readily highlight how by restricting the width of the support structure to an arc length subtending an angle less than 90°, ensures that the battery assemblies 103 may be arranged relative to one another without the support structures 100 of adjacent assemblies interfering with each other. This is may be understood by considering the gaps 114 that naturally form between cylindrically-shaped battery cells, when brought together and in contact on their cylindrical surfaces, as illustrated in Figure 7B.

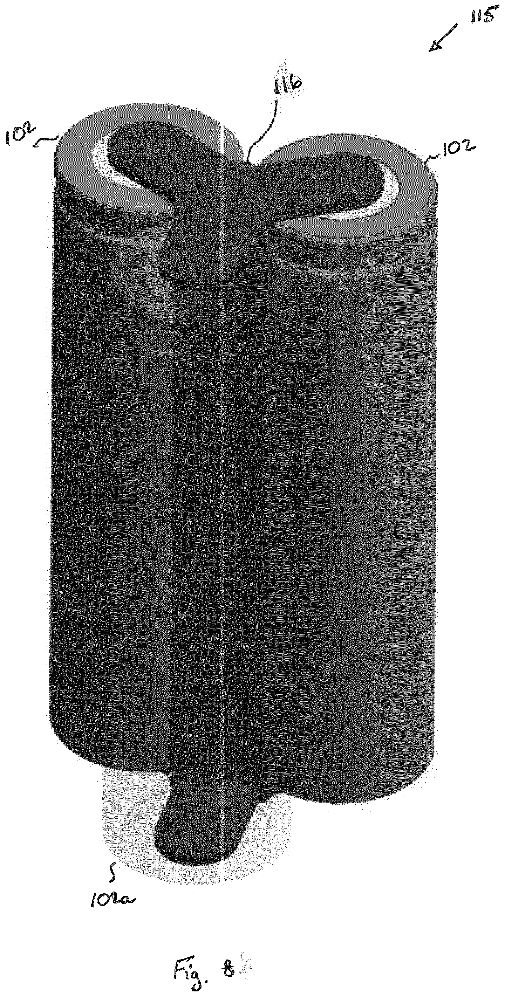

Figure 8 is an alternative configuration of support structure 100, in which three different cylindrical battery cells 102 share the same support structure 116, to form a battery pack 115. One cylindrical battery cell 102a is shown as transparent in order to enable the shape of the shared support structure 116 to be better visualised. In such embodiments it is envisaged that the shared support structure 116 may comprise a plurality of electronic units (not shown), each electronic unit being allocated to measure a property of a different one of the cylindrical battery cells attached to the shared support structure 116. Alternatively it is envisaged that the shared support structure 116 may comprise a single electronic unit arranged to measure a property of each one of the coupled cylindrical battery cells 102.

The elements recited in the claims are to be interpreted broadly based on the language employed in the claims, and not limited to examples described in the present specification or during prosecution of the application, which examples are to be construed as non-exclusive. It is intended, therefore, that the specification and examples be considered as example only, with a scope being indicated by the following claims.

## Claims

1. An electric battery assembly (10) comprising a prismatic battery cell (12) having a positive terminal (20) and a negative terminal (20), the positive and negative terminals (20) protruding from a same end surface of the prismatic battery cell (12) at spaced apart locations on the end surface, the positive and negative terminals (20) in combination with the end surface of the prismatic battery cell (12) defining an inter-terminal space, the inter-terminal space being bounded between the positive and negative terminals (20) in a direction across the end surface and bounded between the end surface of the prismatic battery cell (12) and distal surfaces of the positive and negative terminals (20) in a direction orthogonal to the end surface; an electronic unit (16) comprising a measurement device and a wireless transmitter; a support structure (14) configured for attachment to the prismatic battery cell (12) received in the inter-terminal space, comprising a cradle (14) shaped towards first and second ends thereof, the cradle (14) defining a support surface between the first and second ends, the support surface being configured to secure the electronic unit (16) at least partly within the cradle (14), the support structure (14) comprising at least one conducting element (46) arranged to electrically couple the electronic unit (16) to the positive and negative terminals (20), to thereby provide electrical power for the wireless transmitter and the measurement device; andwherein the measurement device is configured to measure a property of the prismatic battery cell (12), and the wireless transmitter is configured to wirelessly transmit the measured property.

2. The electric battery assembly according to claim 1, wherein the wireless transmitter is a near-field communication device configured for short range communication.

3. The electric battery assembly of any preceding claim, wherein the support structure is removably attached to the battery cell.

4. The electric battery assembly according to any preceding claim, comprising a cover, the cover and the cradle having cooperating surface profiles which attach the cover over the cradle to enclose the electronic unit and thereby restrict movement of the electronic unit relative to the surface of the battery cell.

5. The electric battery assembly according to any preceding claim, wherein the first and second ends of the cradle are configured to attach respectively to the positive and negative terminals.

6. The electric battery assembly according to claim 4 or 5, wherein when the support structure is attached to the prismatic battery cell, the cradle does not extend above the positive and negative terminals with the exception of portions of the cradle which protrude beyond the distal ends of the positive and negative terminals, the portions of the cradle defining the surface profile that cooperates with the surface profile of the cover to attach the cover to the cradle.

7. The electric battery assembly according to any one of claims 4, 5 or 6, wherein, when the support structure is attached to the prismatic battery cell, the cradle extends no further than a periphery of the end surface of the prismatic battery cell from which the positive and negative terminals protrude, and the cover extends no further than the periphery of the end surface of the prismatic battery cell when the cover is attached to the cradle.

8. The electric battery assembly according to any preceding claim, wherein each of the first and second ends of the cradle defines an aperture through which a respective one of the positive and negative terminals extends whereby the cradle attaches to the positive and negative terminals.

9. The electric battery assembly according to any preceding claim, wherein each of the first and second ends of the cradle defines a profile which interlocks with a profile defined by a respective one of the positive and negative terminals to thereby present resistance to removal of the cradle from the terminal; and optionally
wherein the profile defined by the terminal comprises a recess towards a base of the terminal, the profile defined by the cradle being shaped to be received in the recess in the terminal.

10. The electric battery assembly according to claim 9, wherein the end of the cradle is shaped to provide for snap fit attachment to the terminal.

11. The electric battery assembly according to any preceding claim, wherein the cradle comprises a cradle base which defines the support surface on which the electronic unit is supported, the shaped first and second ends of the cradle extending from opposite ends of the cradle base.

12. The electric battery assembly according to claim 11, wherein the cradle base defines a vent aperture therethrough which is in registration with a vent in the end surface of the prismatic battery cell when the cradle is attached to the prismatic battery cell; and optionally
wherein the cradle base with the exception of the vent aperture presents a continuous surface to the end surface of the prismatic battery cell.

13. The electric battery assembly according to claim 11 or 12, wherein the cradle further comprises first and second walls which extend up from respective opposite edges of the cradle base and such that each of the first and second walls extends between the positive and negative terminals, the height of the first and second walls being such that their distal ends extend no further than distal ends of the positive and negative terminals; and optionally
wherein each of the first and second ends of the cradle defines an aperture through which a respective one of the positive and negative terminals extends whereby the cradle attaches to the positive and negative terminals, the aperture being defined by a boundary wall, the boundary wall being substantially the same height as the first and second walls.

14. The electric battery assembly according to claim 13, wherein the cradle base and the first and second walls defines a cradle space for receiving the electronic unit, the electronic unit being shaped such that it is a snug fit between the first and second walls.

15. The electric battery assembly according to any one of the preceding claims, wherein the at least one conducting element comprises first and second electrical conductors extending from opposite ends of the electronic unit, the first and second electrical conductors providing electrical conduction from the positive and negative terminals respectively to thereby provide electrical power to the wireless transmitter; and optionally
wherein at least one of the first and second electrical conductors is electrically coupled to a conductive fastener which is shaped to fit around and thereby fasten to a respective one of the positive and negative terminals, the conductive fastener defining teeth which bear against the terminal, whereby the conductive fastener provides an interference fit with the terminal.

16. The electric battery assembly according to claims 4 and 15, wherein each conductive fastener is comprised in a respective one of the first and second ends of the cradle and each conductive fastener defines a profile which interlocks with a profile defined by a respective one of the positive and negative terminals whereby the conductive fasteners attach the cradle to the positive and negative terminals further to providing electrical conduction.

17. The electric battery assembly according to claim 4 and any one of claims 5 to 16, wherein the cover defines a first surface, which is directed towards the cradle when the cover is attached to the cradle, and a second planar surface, which is directed away from the cradle when the cover is attached to the cradle, at least one antenna formation being defined on the second planar surface, the antenna formation holding an antenna configured to be in wireless communication with an electronic unit antenna comprised in the wireless transmitter of the electronic unit.

## Patentansprüche

1. Elektrobatterieanordnung (10), umfassend eine prismatische Batteriezelle (12) mit einem positiven Anschluss (20) und einem negativen Anschluss (20), wobei der positive und der negative Anschluss (20) von einer gleichen Endoberfläche der prismatischen Batteriezelle (12) an beabstandeten Stellen auf der Endoberfläche vorstehen, wobei der positive und der negative Anschluss (20) in Kombination mit der Endoberfläche der prismatischen Batteriezelle (12) einen Zwischenanschlussraum definieren, wobei der Zwischenanschlussraum zwischen dem positiven und dem negativen Anschluss (20) in einer Richtung quer über die Endoberfläche begrenzt ist und zwischen der Endoberfläche der prismatischen Batteriezelle (12) und den distalen Oberflächen der positiven und negativen Anschlüsse (20) in einer Richtung orthogonal zu der Endoberfläche begrenzt ist; eine Elektronikeinheit (16), umfassend eine Messvorrichtung und einen drahtlosen Sender; eine Stützstruktur (14), die zur Befestigung an der prismatischen Batteriezelle (12) konfiguriert ist, die in dem Zwischenanschlussraum aufgenommen ist, umfassend eine Halterung (14), die in Richtung eines ersten und zweiten Endes davon ausgeformt ist, wobei die Halterung (14) eine Stützoberfläche zwischen dem ersten und zweiten Enden definiert, wobei die Stützoberfläche konfiguriert ist, um die Elektronikeinheit (16) zumindest teilweise in der Halterung (14) zu sichern, die Stützstruktur (14) zumindest ein leitendes Element (46) umfassend, das angeordnet ist, um die Elektronikeinheit (16) elektrisch mit dem positiven und negativen Anschluss (20) zu koppeln, um dadurch elektrischen Strom für den drahtlosen Sender und die Messvorrichtung bereitzustellen; und wobei die Messvorrichtung konfiguriert ist, um eine Eigenschaft der prismatischen Batteriezelle (12) zu messen, und der drahtlose Sender konfiguriert ist, um die gemessene Eigenschaft drahtlos zu übertragen.

2. Elektrobatterieanordnung gemäß Anspruch 1, wobei der drahtlose Sender eine Nahfeldkommunikationsvorrichtung ist, die für Nahbereichskommunikation konfiguriert ist.

3. Elektrobatterieanordnung gemäß einem vorhergehenden Anspruch, wobei die Stützstruktur entfernbar an der Batteriezelle befestigt ist.

4. Elektrobatterieanordnung gemäß einem vorhergehenden Anspruch, umfassend eine Abdeckung, wobei die Abdeckung und die Halterung zusammenwirkende Oberflächenprofile aufweisen, welche die Abdeckung über der Halterung befestigen, um die Elektronikeinheit zu umschließen und dadurch eine Bewegung der Elektronikeinheit relativ zu der Oberfläche der Batteriezelle einzuschränken.

5. Elektrobatterieanordnung gemäß einem vorhergehenden Anspruch, wobei das erste und das zweite Ende der Halterung konfiguriert sind, jeweils an dem positiven und dem negativen Anschluss befestigt zu werden.

6. Elektrobatterieanordnung gemäß Anspruch 4 oder 5, wobei, wenn die Stützstruktur an der prismatischen Batteriezelle befestigt ist, sich die Halterung nicht über den positiven und den negativen Anschluss erstreckt, mit Ausnahme von Abschnitten der Halterung, die über die distalen Enden des positiven und des negativen Anschlusses hinausragen, wobei die Abschnitte der Halterung das Oberflächenprofil definieren, das mit dem Oberflächenprofil der Abdeckung zusammenwirkt, um die Abdeckung an der Halterung zu befestigen.

7. Elektrobatterieanordnung gemäß einem der Ansprüche 4, 5 oder 6, wobei, wenn die Stützstruktur an der prismatischen Batteriezelle befestigt ist, sich die Halterung nicht weiter als ein Umfang der Endoberfläche der prismatischen Batteriezelle erstreckt, von der die positiven und negativen Anschlüsse vorstehen, und sich die Abdeckung nicht weiter als der Umfang der Endoberfläche der prismatischen Batteriezelle erstreckt, wenn die Abdeckung an der Halterung befestigt ist.

8. Elektrobatterieanordnung gemäß einem vorhergehenden Anspruch, wobei jedes von dem ersten und dem zweiten Ende der Halterung eine Öffnung definiert, durch welche sich ein jeweiliger von dem positiven und dem negativen Anschluss erstreckt, wodurch die Halterung an dem positiven und dem negativen Anschluss befestigt wird.

9. Elektrobatterieanordnung gemäß einem vorhergehenden Anspruch, wobei jedes von dem ersten und dem zweiten Ende der Halterung ein Profil definiert, das mit einem Profil ineinandergreift, das durch einen jeweiligen von dem positiven und dem negativen Anschluss definiert ist, um dadurch einen Widerstand gegen das Entfernen der Halterung von dem Anschluss darzustellen; und
wobei das Profil, das durch den Anschluss definiert ist, optional eine Aussparung in Richtung einer Basis des Anschlusses umfasst, wobei das Profil, das durch die Halterung definiert ist, ausgeformt ist, um in der Aussparung in dem Anschluss aufgenommen zu werden.

10. Elektrobatterieanordnung gemäß Anspruch 9, wobei das Ende der Halterung ausgeformt ist, um eine Schnappbefestigung an dem Anschluss bereitzustellen.

11. Elektrobatterieanordnung gemäß einem vorhergehenden Anspruch, wobei die Halterung eine Halterungsbasis umfasst, welche die Stützoberfläche definiert, auf welcher die Elektronikeinheit gestützt wird, wobei sich das ausgeformte erste und zweite Ende der Halterung von gegenüberliegenden Enden der Halterungsbasis erstrecken.

12. Elektrobatterieanordnung gemäß Anspruch 11, wobei die Halterungsbasis eine Entlüftungsöffnung dadurch definiert, welche in Ausrichtung mit einer Entlüftung in der Endoberfläche der prismatischen Batteriezelle ist, wenn die Halterung an der prismatischen Batteriezelle befestigt ist; und
wobei die Halterungsbasis mit der Ausnahme der Entlüftungsöffnung optional eine durchgehende Oberfläche zu der Endoberfläche der prismatischen Batteriezelle darstellt.

13. Elektrobatterieanordnung gemäß Anspruch 11 oder 12, wobei die Halterung ferner eine erste und eine zweite Wand umfasst, welche sich von jeweiligen gegenüberliegenden Kanten der Halterungsbasis nach oben erstrecken und so, dass sich jede von der ersten und der zweiten Wand zwischen dem positiven und dem negativen Anschluss erstreckt, wobei die Höhe der ersten und der zweiten Wand so ist, dass sich ihre distalen Enden nicht weiter als bis zu den distalen Enden des positiven und des negativen Anschlusses erstrecken; und
wobei jedes von dem ersten und dem zweiten Ende der Halterung optional eine Öffnung definiert, durch welche sich ein jeweiliger von dem positiven und dem negativen Anschluss erstreckt, wodurch die Halterung an dem positiven und dem negativen Anschluss befestigt wird, wobei die Öffnung durch eine Begrenzungswand definiert ist, wobei die Begrenzungswand im Wesentlichen die gleiche Höhe wie die erste und die zweite Wand aufweist.

14. Elektrobatterieanordnung gemäß Anspruch 13, wobei die Halterungsbasis und die erste und zweite Wand einen Halterungsraum zum Aufnehmen der Elektronikeinheit definieren, wobei die Elektronikeinheit so geformt ist, dass sie in einer engen Passung zwischen der ersten und zweiten Wand ist.

15. Elektrobatterieanordnung gemäß einem vorhergehenden Anspruch, wobei das zumindest eine Leitelement einen ersten und einen zweiten elektrischen Leiter umfasst, die sich von gegenüberliegenden Enden der Elektronikeinheit erstrecken, wobei der erste und der zweite elektrische Leiter eine elektrische Leitung von dem positiven bzw. dem negativen Anschluss bereitstellen, um dadurch dem drahtlosen Sender elektrische Energie bereitzustellen; und
wobei zumindest einer von dem ersten und dem zweiten elektrischen Leiter optional elektrisch an ein leitfähiges Befestigungselement gekoppelt ist, welches so geformt ist, dass es um einen jeweiligen von dem positiven und dem negativen Anschluss passt und dadurch daran befestigt wird, wobei das leitfähige Befestigungselement Zähne definiert, die an dem Anschluss anliegen, wodurch das leitfähige Befestigungselement eine Presspassung mit dem Anschluss bereitstellt.

16. Elektrobatterieanordnung gemäß den Ansprüchen 4 und 15, wobei jedes leitfähige Befestigungselement in einem jeweiligen von dem ersten und dem zweiten Ende der Halterung umfasst ist und jedes leitfähige Befestigungselement ein Profil definiert, das mit einem Profil ineinandergreift, das durch einen jeweiligen von dem positiven und dem negativen Anschluss definiert ist, wodurch die leitfähigen Befestigungselemente die Halterung an dem positiven und dem negativen Anschluss befestigen, um weiter eine elektrische Leitung bereitzustellen.

17. Elektrobatterieanordnung gemäß Anspruch 4 und einem der Ansprüche 5 bis 16, wobei die Abdeckung eine erste Oberfläche, welche zu der Halterung gerichtet ist, wenn die Abdeckung an der Halterung befestigt ist, und eine zweite ebene Oberfläche definiert, die von der Halterung weg gerichtet ist, wenn die Abdeckung an der Halterung befestigt ist, wobei zumindest eine Antennenformation auf der zweiten ebenen Oberfläche definiert ist, wobei die Antennenformation eine Antenne hält, die konfiguriert ist, um in drahtloser Kommunikation mit einer Antenne einer Elektronikeinheit zu sein, die in dem drahtlosen Sender der Elektronikeinheit umfasst ist.

## Revendications

1. Ensemble batterie électrique (10) comprenant une cellule de batterie prismatique (12) ayant une borne positive (20) et une borne négative (20), les bornes positive et négative (20) faisant saillie d'une même surface d'extrémité de la cellule de batterie prismatique (12) à des emplacements espacés sur la surface d'extrémité, les bornes positive et négative (20) en combinaison avec la surface d'extrémité de la cellule de batterie prismatique (12) définissant un espace inter-borne, l'espace inter-borne étant délimité entre les bornes positive et négative (20) dans une direction transversale à la surface d'extrémité et délimitée entre la surface d'extrémité de la cellule de batterie prismatique (12) et les surfaces distales des bornes positive et négative (20) dans une direction orthogonale à la surface d'extrémité ; une unité électronique (16) comprenant un dispositif de mesure et un émetteur sans fil; une structure de support (14) conçue pour être attachée à la cellule de batterie prismatique (12) reçue dans l'espace inter-borne, comprenant un berceau (14) profilé vers les première et seconde extrémités de celui-ci, le berceau (14) définissant une surface de support entre les première et seconde extrémités, la surface de support étant conçue pour fixer l'unité électronique (16) au moins partiellement à l'intérieur du berceau (14), la structure de support (14) comprenant au moins un élément conducteur (46) agencé pour coupler électriquement l'unité électronique (16) aux bornes positive et négative (20), de manière à fournir de l'énergie électrique pour l'émetteur sans fil et le dispositif de mesure ; et dans lequel le dispositif de mesure est configuré pour mesurer une propriété de la cellule de batterie prismatique (12), et l'émetteur sans fil est configuré pour transmettre sans fil la propriété mesurée.

2. Ensemble batterie électrique selon la revendication 1, dans lequel l'émetteur sans fil est un dispositif de communication en champ proche configuré pour une communication à courte portée.

3. Ensemble batterie électrique selon l'une quelconque des revendications précédentes, dans lequel la structure de support est fixée de manière amovible à la cellule de batterie.

4. Ensemble batterie électrique selon l'une quelconque des revendications précédentes, comprenant un capot, le capot et le berceau ayant des profils de surface coopérants qui attachent le capot sur le berceau pour enfermer l'unité électronique et restreindre ainsi le mouvement de l'unité électronique par rapport à la surface de la cellule de batterie.

5. Ensemble batterie électrique selon l'une quelconque des revendications précédentes, dans lequel les première et seconde extrémités du berceau sont configurées pour s'attacher respectivement aux bornes positive et négative.

6. Ensemble batterie électrique selon la revendication 4 ou 5, dans lequel lorsque la structure de support est attachée à la cellule de batterie prismatique, le berceau ne s'étend pas au-dessus des bornes positives et négatives à l'exception des parties du berceau qui font saillie au-delà des extrémités distales des bornes positives et négatives, les parties du berceau définissant le profil de surface qui coopère avec le profil de surface du capot pour attacher le capot au berceau.

7. Ensemble batterie électrique selon l'une quelconque des revendications 4, 5 ou 6, dans lequel, lorsque la structure de support est attachée à la cellule de batterie prismatique, le berceau ne s'étend pas plus loin qu'une périphérie de la surface d'extrémité de la cellule de batterie prismatique à partir de laquelle les bornes positive et négative font saillie, et le capot ne s'étend pas plus loin que la périphérie de la surface d'extrémité de la cellule de batterie prismatique lorsque le capot est attaché au berceau.

8. Ensemble batterie électrique selon l'une quelconque des revendications précédentes, dans lequel chacune des première et seconde extrémités du berceau définit une ouverture à travers laquelle s'étend l'une respective des bornes positive et négative, moyennant quoi le berceau s'attache aux bornes positive et négative.

9. Ensemble batterie électrique selon l'une quelconque des revendications précédentes, dans lequel chacune des première et seconde extrémités du berceau définit un profil qui s'enclenche avec un profil défini par l'une respective des bornes positive et négative pour présenter ainsi une résistance au retrait du berceau de la borne ; et facultativement
dans lequel le profil défini par la borne comprend un évidement vers une base de la borne, le profil défini par le berceau étant profilé pour être reçu dans l'évidement dans la borne.

10. Ensemble batterie électrique selon la revendication 9, dans lequel l'extrémité du berceau est formée pour permettre une fixation par encliquetage à la borne.

11. Ensemble batterie électrique selon l'une quelconque des revendications précédentes, dans lequel le berceau comprend une base de berceau qui définit la surface de support sur laquelle l'unité électronique est supportée, les première et seconde extrémités profilées du berceau s'étendant à partir des extrémités opposées de la base de berceau.

12. Ensemble batterie électrique selon la revendication 11, dans lequel la base du berceau définit une ouverture d'évent à travers celle-ci qui est en correspondance avec un évent dans la surface d'extrémité de la cellule de batterie prismatique lorsque le berceau est attaché à la cellule de batterie prismatique ; et éventuellement
dans lequel la base de berceau à l'exception de l'ouverture d'évent présente une surface continue à la surface d'extrémité de la cellule de batterie prismatique.

13. Ensemble batterie électrique selon la revendication 11 ou 12, dans lequel le berceau comprend en outre des première et seconde parois qui s'étendent vers le haut à partir des bords opposés respectifs de la base du berceau et de telle sorte que chacune des première et seconde parois s'étendent entre les bornes positive et négative, la hauteur des première et seconde parois étant telle que leurs extrémités distales ne s'étendent pas plus loin que les extrémités distales des bornes positive et négative ; et facultativement
dans lequel chacune des première et seconde extrémités du berceau définit une ouverture à travers laquelle s'étend l'une respective des bornes positive et négative, moyennant quoi le berceau s'attache aux bornes positive et négative, l'ouverture étant définie par une paroi de délimitation, la paroi de délimitation étant sensiblement de la même hauteur que les première et seconde parois.

14. Ensemble batterie électrique selon la revendication 13, dans lequel la base de berceau et les première et seconde parois définissent un espace de berceau pour recevoir l'unité électronique, l'unité électronique étant profilée de telle sorte qu'elle soit un ajustement serré entre les première et seconde parois.

15. Ensemble batterie électrique selon l'une quelconque des revendications précédentes, dans lequel l'au moins un élément conducteur comprend des premier et second conducteurs électriques s'étendant à partir des extrémités opposées de l'unité électronique, les premier et second conducteurs électriques fournissant une conduction électrique à partir des bornes positive et négative respectivement pour fournir ainsi de l'énergie électrique à l'émetteur sans fil ; et facultativement
dans lequel au moins l'un des premier et second conducteurs électriques est couplé électriquement à un élément de fixation conducteur qui est profilé pour s'adapter autour et ainsi se fixer à l'une respective des bornes positive et négative, l'élément de fixation conducteur définissant des dents qui portent contre la borne, moyennant quoi l'élément de fixation conducteur fournit un ajustement avec serrage avec la borne.

16. Ensemble batterie électrique selon les revendications 4 et 15, dans lequel chaque élément de fixation conducteur est compris dans l'une respective des première et seconde extrémités du berceau et chaque élément de fixation conducteur définit un profil qui s'enclenche avec un profil défini par l'une respective des bornes positive et négative, moyennant quoi les éléments de fixation conducteurs attachent le berceau aux bornes positive et négative en plus de fournir une conduction électrique.

17. Ensemble batterie électrique selon la revendication 4 et l'une quelconque des revendications 5 à 16, dans lequel le capot définit une première surface, qui est dirigée vers le berceau lorsque le capot est attaché au berceau, et une seconde surface plane, qui est dirigée à l'opposé du berceau lorsque le capot est attaché au berceau, au moins une formation d'antenne étant définie sur la seconde surface plane, la formation d'antenne maintenant une antenne configurée pour être en communication sans fil avec une antenne d'unité électronique comprise dans l'émetteur sans fil de l'unité électronique.
